# EUROPEAN PATENT SPECIFICATION

(11) **EP 0 494 067 B1**
(45) Date of publication and mention of the grant of the patent: **13.08.1997**
(21) Application number: 92100002.2
(22) Date of filing: 01.01.1992
(51) Int. Cl.: A01N 65/00

(54) **Novel pesticidal compositions derived from neem oil and neem wax fractions**
Neue Pestizidzusammensetzungen gewonnen aus Nimöl und Nimwachsfraktionen
Compositions pesticides nouvelles dérivées de fractions de l'huile de neem et de la cire de neem

(30) Priority: 03.01.1991 US 637027
(43) Date of publication of application: 08.07.1992
(73) Proprietor: Thermo Trilogy Corporation, Waltham, Massachusetts 02254 (US); THE UNITED STATES OF AMERICA as represented by THE SECRETARY OF AGRICULTURE, Washington, DC 20250 (US)
(72) Inventor: Walter, James Frederic, Ashton, MD 20861 (US); Locke, James Charles, Silver Spring, MD 20904 (US); Larew III, Hiram Gordon, Hyattsville, MD 20783 (US)
(74) Representative: UEXKÜLL & STOLBERG

(56) References cited:
- EP-A- 0 436 257
- ENTOMOLOGIA EXPERIMENTALIS & APPLICATA, vol. 24, no. 3, 1978; M. JACOBSON et al., pp. 448-457
- PHYTOPATHOLOGY, vol. 81, no. 6, 1991; J.C. LOCKE et al., p. 703

## Description

### Background of the Invention

### Field of the Invention

This invention relates to novel pesticide compositions obtained from neem seed extracts prepared by extracting seeds with non-polar hydrophobic solvents. More specifically, a neem wax and a clarified neem oil fraction are prepared which exhibit the consistent ability to repel pests from plant surfaces and to kill insect and fungal pests at various life stages.

### Description of Prior Art

The neem tree, a tropical evergreen, has been used for centuries as a source of pesticides to which insects have not developed a resistance. Various neem seed extracts, particularly the ones containing the tetranortriterpenoid azadirachtin, are known to influence the feeding behavior, metamorphosis (insect growth regulating effect), fecundity, and fitness of numerous insect and fungal species belonging to various orders.

Neem seeds also contain an oil substance which has been used for its medicinal and therapeutic properties for centuries. However, "neem oil" has been produced by a number of methods and this has lead to a great variability in the properties of materials designated as "neem oil". Very little chemical characterization has therefore been possible. Many of the publications referring to "neem oil" give no information as to its preparation, which is the key determinant of its composition.

There are two principle methods of removal of oil from neem seeds: expulsion, where the oil is pressed from the seeds, and extraction, where the oil is removed from the seeds by solubilization in a solvent. Inherently, materials made by these methods have very different properties. Oil expelled from the seed will also contain water expelled from the seed by the same process. This aqueous material will carry along with it liminoids, such as azadirachtin, which themselves have pesticidal activity.

Khan et al. (1986) report that neem oil (source unidentified) showed no inhibitory affect on the growth of a variety of fungi. In fact, it is reported that the neem oil was contaminated with molds including *Aspergillus niger* and *Aspergillus flavus*. Similarly, Sharma et al. (1986) report that 3-5% neem seed oils (no method of preparation given) had no effect on the control of pod borer *Heliothis armigera* on chick-pea, and Gujar et al. (1985) report that neem seed oil (no method of preparation given) had no effect on the desert locust, *Schistocerca gregaria.*

Contrary to this, it has been reported that neem oil formulations prepared by expressing oil from the seeds or by extracting with aqueous solvents are effective pesticides and fungicides. It is reported that 10% neem oil (preparation unidentified) (Anon. 1986) inhibited the growth of certain fungi *in vitro*. Dreyer (1986) discloses that neem oil obtained by hand-pressing in the cold was similar in the control of phytophagous arthropods to aqueous extracts; expeller-pressed oil was much less active. Singh et al. (1980) reports that neem oil obtained with a Soxhlet apparatus, no solvent given, controls fungi including *Fusarium oxysporus*, *Rhizoctonia solani, Sclerotium rolfsii* and *Sclerotia sclerotiorum.* It is likely that all of these materials contained appreciable polar moieties, including several liminoids.

Similarly, neem oil has been reported to have insecticidal properties but the reports of efficacy are often in conflict, perhaps because of significant differences in the composition of the "neem oil" tested. Furinstau et al. (1985) report that a 1% suspension of neem oil (no method of preparation identified) is effective at controlling aphids but is phytotoxic to sorghum plants. Yet Saxena et al. (1984) report that a >6% suspension of neem oil is necessary to achieve statistical control of the plant hopper *Nilaparvata lugens* on rice seedlings, apparently with no phytotoxic effect.

Hydrophobic solvent extracted neem oil is disclosed in U.S.S.N. 07/456,762 (Locke et al.). It is taught that the disclosed formulations exhibit the ability to repel insects from plant surfaces, prevent fungal growth and kill insect and fungal pests at various life stages.

It has now been discovered that consistently fungicidal and insecticidal neem fractions can be obtained by extraction of neem seeds using a non-polar solvent, removing the solvent from the resulting neem oil extract, and fractionating the resulting neem oil by cooling to obtain a neem wax fraction and a clarified neem oil fraction. Furthermore, it is shown that freeze fractionation of the neem oil produces a non-phytotoxic clarified neem oil material.

### Summary of the Invention

In accordance with the present invention, there are provided certain novel pesticide formulations derived from non-polar, hydrophobic solvent neem oil extracts which are free of azadirachtin, and which, following removal of the solvent to yield neem oil, are further separated into distinct fractions: a clarified neem oil fraction and a neem wax fraction. These fractions exhibit the ability to kill insect larvae as well as adults, and control foliar and surface fungal pathogens.

U.S.S.N. 07/456,762 (Locke et al.) teaches that non-polar hydrophobic solvent extracts of ground neem seed yield a neem oil product that can have combined insecticidal and fungicidal activities. The present invention teaches improvement of the neem oil product by fractionating to separate the waxes from the oils. The clarified neem oil demonstrates increased insect repellency, decreased phytotoxicity, decreased skin irritability, increased fungicidal activity and increased wetting ability. The neem wax demonstrates increased insect repellency, increased fungicidal activity and increased wetting ability.

It is therefore an object of this invention to provide novel natural pesticides derived from the clarified neem oil fraction or neem wax fraction of non-polar solvent-extracted neem oil. It is further intended that these novel pesticides will repel insect pests, kill insects at various life stages, and control various pathogenic fungi.

An additional object is to provide novel natural pesticides which repel and kill insects and pathogenic fungi on plant surfaces as foliar pesticides. Related objects are to provide methods of preparing and using the novel natural pesticides.

Another object of this invention is to provide natural pesticide formulations derived from neem seeds for protecting stored fruit and grains from various insect or fungal pests.

A further object of this invention is to provide natural pesticide formulations derived from neem seeds that can protect animals from various insect or fungal pests.

It is also an object of this invention to provide natural pesticide formulations derived from neem seeds that can protect stored objects such as books, papers or cloth from various insect or fungal pests.

A final object of the invention is to provide novel neem-based pesticide compositons having one or more of the following characteristics: insect repellency, low phytotoxicity, low skin irritation, and good wetting ability.

### Detailed Description

Some active ingredients of the seeds and leaves of the tropical neem tree, *Azadirachtin indica*, particularly the tetranortriterpenoid azadirachtin, are known for their potent pesticidal activities. The present invention is directed to various clarified neem oil and neem wax fractions that are free of azadirachtin and substantially free of water, and yet possess the ability to repel insect pests from surfaces, kill insect pests at various life stages and prevent fungal growth on plant and other surfaces.

As used herein, the term "pesticide" is intended to encompass insecticides, larvacides, ovicides, fungicides and the like. The pesticide formulations of this invention are prepared from neem oil extract obtained by extracting neem seeds or expressed neem oil with a suitable non-polar, hydrophobic solvent. Preferably, neem seeds are coarsely ground for extraction of the neem oil. It will also be possible to treat neem oil that has been physically expressed from the seeds by commonly practiced methods. However, treatment of expressed oil to form the neem fractions of this invention is less preferred than direct solvent extraction from neem seeds.

Suitable non-polar hydrophobic solvents for use in extracting the neem oil from the neem seeds or expressed neem oil will include those non-polar hydrophobic solvents having high neem oil solubility and no azadirachtin solubility. The preferred non-polar hydrophobic solvents include, but are not limited to, aliphatic hydrocarbons such as pentane, hexane, heptane, octane, nonane, decane, isooctane, cyclohexane, and isomers thereof; petroleum distillates, petroleum ether, and the like; aromatics such as benzene, toluene, and the like; substituted aromatics such as chlorobenzene, benzaldehyde, xylenes, and the like; and mixtures thereof. Various other non-polar hydrophobic solvents having the above characteristics are well known to those skilled in the art, and the choice of a particular solvent is not critical to the invention, provided that the solvent is non-polar, hydrophobic, and exhibits no azadirachtin solubility and a high degree of neem oil solubility.

The solvent is then stripped from the neem oil extract at the lowest practical temperature to prevent degradation, preferably being removed by vacuum evaporation, although other methods may be used. The resulting neem oil is then fractionated. The oil is cooled to about 5 to 15°C, preferably less than about 10°C, whereupon certain waxes and fatty acids contained therein solidify. The solid components are filtered out to obtain a semi-solid fraction designated as the "neem wax" fraction. The remaining liquid filtrate is designated as "clarified neem oil" or the neem oil fraction.

The 5-15°C temperature range represents the transition temperature range of the neem wax fraction between its clear liquid form and its yellow white solid form. The fraction that clouds the oil and then precipitates out is the neem wax fraction. The remaining clarified oil fraction, on the other hand, remains a clear liquid down to 5°C.

The two fractions produced by this invention each possess distinct insecticidal, fungicidal and phytotoxic properties. While both the clarified neem oil and neem wax fractions exhibit useful pesticidal properties, it has been discovered that there are certain applications where it may be advantageous to use either the oil or wax fraction.

The clarified neem oil, which is an orange brown liquid at room temperature, has very low phytotoxicity and causes little or no irritation on contact. It exhibits the ability to kill not only insect larvae, but also insects in the egg and adult stage. Application at the egg stage causes large numbers of the eggs to shrivel, eliminating hatching. Where hatching occurs, many nymphs die upon emergence from the egg case. Treatment of plants also acts to repel adult insects, preventing eggs from being deposited. In addition, this neem oil fraction is a potent foliar and skin fungicide.

Clarified neem oil can be effectively used as a spray on surfaces to control various insect and fungal pests on a variety of plants, stored grains, and animals. Furthermore, it can be used to protect stored books, rugs, or other materials normally attacked by insect and fungal pests by adding as an aerosol spray or mist or by incorporation into the manufacturing process. Finally, it can be applied as a soap, gel, liquid, salve, or the like, to repel insects and protect skin or wool from insect and fungal attack.

In comparison, neem wax is a yellow-white, flowable semi-solid at room temperature (melting point about 5-15°C, preferably about 10°C). It has the same general insecticidal and fungicidal effects as the neem oil fraction. It exhibits a superior ability to kill insect eggs. However, it may not be quite as effective as clarified neem oil for foliar uses, as it exhibits a higher phytotoxicity than clarified neem oil. Formulations containing neem wax may be particularly suitable for use as a dormant spray prior to the emergence of foliage on the plant.

The neem wax fraction may be used as a protectant for books and woolens. Due to the semi-solid state of the neem wax fraction at room temperature, the treated surface would feel dry rather than oily. In addition, it can easily be incorporated in protective soaps, repellent sticks and repellent candles.

Pesticide formulations in accordance with this invention can be prepared by diluting one of the neem oil or neem wax fractions with about 0.1 to 50% by volume surfactant, inert ingredient or diluent. The formulation may then be further diluted with water to form a 0.1 to 10%, preferably 0.1 to 5%, suspension before application. These dilutions are intended to provide usable ranges for both the wax and clarified oil fractions, with the understanding that the fractions will be diluted to the desired and appropriate fluidity for the intended purpose (*i.e.*, as an insecticide and/or fungicide for one or more applications).

One or more surfactants may be used in preparing the pesticide or fungicide formulations. Non-ionic surfactants will generally be preferred. Examples include, but are not limited to, Triton B-956, Tween-20, sodium dodecylsulfide and the like. For certain applications, anionic surfactants (such as Ivory® liquid soap or the like) may be preferred. Where aqueous diluents or ingredients are used, an emulsifying surfactant should be used. Selection of surfactants, inert ingredients and diluents will depend on the application and are well known to those of ordinary skill in the art.

It may also be desired to mix one (or both) of the neem fractions of this invention with one or more active ingredients. For example, useful but environmentally toxic or phytotoxic chemical pesticides can be used at a reduced, and thereby safer, level by use as a co-pesticide with the products of this invention. Also, it may be desired to add a neem wax component to a standard pesticide formulation to make the pesticide more resistant to being washed off.

Without further elaboration, it is believed that one skilled in the art, using the preceding detailed description can utilize the present invention to its fullest extent. The principles, preferred embodiments and modes of operation of the present invention have been described in the foregoing specification. The following examples are provided to illustrate the invention in accordance with the principles of this invention, but are not to be construed as limiting the invention in any way except as indicated in the appended claims. Variations and changes may be made by those skilled in the art without departing from the spirit of the invention. All parts and percentages are by weight unless otherwise indicated.

### EXAMPLE 1

This example illustrates the effectiveness of the clarified neem oil and neem wax fractions of this invention on newly laid or near-to-hatch greenhouse whitefly (*Trialeurodes vaporariorum*) eggs. These fractions were obtained by first extracting 180 lb. neem seed with 150 gal. hexane in an agitated vessel at room temperature for 20 hours. The seeds were then separated from the hexane-oil extract by centrifugation and the hexane-oil extract was evaporated at 60°C until 35 lbs. of a thick brown neem oil product was obtained. The neem oil product was cooled to 10°C and then filtered to remove precipitated waxes. Thirty pounds of clarified neem oil were obtained along with 5 lbs. of neem wax.

The clarified neem oil fraction and neem wax fraction each were formulated into 1% and 3% solutions in 100 ml water containing one drop of surfactant (Ivory™ liquid soap). To test the effectiveness of the formulations, 50 potted chrysanthemum plants cv. Iceberg had all but 3 fully-expanded leaves removed. The plants were placed in a whitefly colony for 24 hours, removed, and sprayed with a water-mist to remove the adult whiteflies from the plants. The plants were divided into ten groups of five plants and treated as follows:
- Group 1:: sprayed with water 0 days after exposure (DAE) to whiteflies,
- Group 2:: sprayed with 1% clarified neem oil formulation 0 DAE,
- Group 3:: sprayed with 3% clarified neem oil formulation 0 DAE,
- Group 4:: sprayed with 1% clarified neem oil formulation 4 DAE,
- Group 5:: sprayed with 3% clarified neem oil formulation 4 DAE,
- Group 6:: sprayed with water 0 days after exposure (DAE) to whiteflies,
- Group 7:: sprayed with 1% neem wax formulation 0 DAE,
- Group 8:: sprayed with 3% neem wax formulation 0 DAE,
- Group 9:: sprayed with 1% neem wax formulation 4 DAE, and
- Group 10:: sprayed with 3% neem wax formulation 4 DAE.

Greenhouse whitefly eggs usually hatch 5-6 days after oviposition, thus the 4 DAE treatments (Groups 4 and 5) were applied near the time of egg hatch. Once all the eggs had hatched on the control plants (Groups 1 and 6, those sprayed with water), the effectiveness of each neem formulation was assessed by counting the eggs and dead nymphs per leaf. The results were as follows:

**Table 1**

| Effect of Clarified Neem Oil or Neem Wax Formulations When Sprayed on New and 4-Day Old Greenhouse Whitefly Eggs Laid on Chrysanthemums | | | | |
|---|---|---|---|---|
| **Trial** | **Treatment** | **Eggs**^{**1**} | **Dead Nymphs**^{**2**} | **% Mortality**^{**3**} |
| | | | | |

| **Clarified Oil:** | | | | |
|---|---|---|---|---|
| Group 1 | Water | 180a | 27b | 15 |
| Group 2 | 1%, 0 DAE | 126a | 118a | 94 |
| Group 3 | 3%, 0 DAE | 137a | 131a | 96 |
| Group 4 | 1%, 4 DAE | 173a | 121a | 70 |
| Group 5 | 3%, 4 DAE | 130a | 124a | 95 |

| **Wax:** | | | | |
|---|---|---|---|---|
| Group 6 | Water | 314bc | 3d | 0 |
| Group 7 | 1%, 0 DAE | 401ab | 310b | 77 |
| Group 8 | 3%, 0 DAE | 198c | 197c | 99⁴ |
| Group 9 | 1%, 4 DAE | 311bc | 303b | 97⁴ |
| Group 10 | 3%, 4 DAE | 511a | 511a | 100⁴ |

| | | | | |
|---|---|---|---|---|
| 1 Values are means per 100 cm² leaf area. Means within trial followed by the same letter are not significantly different; DMRT, P = 0.05, N = 15 leaves. | | | | |
| 2 "Dead Nymphs" include shriveled eggs (in which the nymph did not emerge but was nevertheless dead). | | | | |
| 3 Number of dead nymphs divided by the number of eggs. | | | | |
| 4 Most eggs shrivelled. | | | | |

The clarified neem oil and neem wax fractions at both concentrations and exposure times caused significant nymphal mortality. The clarified neem oil fraction caused slightly less mortality when applied as a 1% spray to older eggs than at other strengths and times. The neem wax fraction caused most of the eggs to appear shriveled with the 3% spray at both treatment times, and with the 1% spray at 4 DAE. Mortality was primarily observed at the egg or newly hatched nymphal stage. It appears that while clarified neem oil is particularly effective in killing whitefly nymph, the neem wax is particularly effective in killing whitefly eggs.

### EXAMPLE 2

This example illustrates the effectiveness of the clarified neem oil fraction and the neem wax fraction as repellants against adult *Bemisia tabaci* whiteflies when sprayed on chrysanthemum foliage. Clarified neem oil and neem wax formulations were prepared according to Example 1. To test the effectiveness of the formulations, eighteen 3-week-old potted chrysanthemum plants cv. Iceberg, having all but 3 fully expanded leaves removed, were divided into six groups of three and treated as follows:
- Group 1:: sprayed with water,
- Group 2:: sprayed with 1% clarified neem oil formulation,
- Group 3:: sprayed with 3% clarified neem oil formulation,
- Group 4:: sprayed with water,
- Group 5:: sprayed with 1% neem wax formulation,
- Group 6:: sprayed with 3% neem wax formulation,
and then exposed to a colony of whiteflies for 24 hours. After exposure, the plants were cleaned of whiteflies and the number of eggs per leaf was determined. The results were as follows:

**Table 2**

| Effectiveness of Clarified Neem Oil and Neem Wax Formulations as Repellants Against *Bemisia tabaci* on Chrysanthemums | | |
|---|---|---|
| **Trial** | **Treatment** | **Eggs**^{**1**} |
| | | |

| **Clarified Oil:** | | |
|---|---|---|
| Group 1 | Water | 33.1a |
| Group 2 | 1% | 1.4b |
| Group 3 | 3% | 1.3b |

| **Wax:** | | |
|---|---|---|
| Group 4 | Water | 63.6a |
| Group 5 | 1% | 7.2b |
| Group 6 | 3% | 0.2b |

| | | |
|---|---|---|
| 1 Values are means calculated per 100 cm² leaf area. Means in the same trial followed by the same letter are not significantly different; DMRT, P = 0.05, N = 9 leaves. | | |

The results show that all the clarified neem oil and neem wax formulations were effective at repelling whiteflies.

### EXAMPLE 3

This example illustrates the longevity of repellant action of both the neem wax and clarified neem oil fractions when sprayed on chrysanthemum cv. Iceberg foliage. Repellency was quantified by counting the number of greenhouse whitefly (*Trialeurodas vaporariorum*) eggs laid on leaves. Clarified neem oil and neem wax formulations were prepared according to Example 1. Forty eight 3-4 week old chrysanthemum plants cv. Iceberg having all but 3 fully expanded leaves removed, were divided into three groups of 16 plants each and treated as follows:
- Group 1:: sprayed with water,
- Group 2:: sprayed with 1% clarified neem oil formulation,
- Group 3:: sprayed with 3% clarified neem oil formulation,
- Group 4:: sprayed with water,
- Group 5:: sprayed with 1% neem wax formulation,
- Group 6:: sprayed with 3% neem wax formulation.

On the same day as spraying (Day 0) four plants from each group were placed in a whitefly colony for 24 hours. On days 3, 7 and 14, four more plants from each group were exposed to the whitefly colony for 24 hours. After each exposure, the number of eggs per 100 cm² of leaf area on the top two leaves were counted. The results were as follows:

**Table 3**

| Clarified Neem Oil and Neem Wax -- Residual Effects | | | | | |
|---|---|---|---|---|---|
| **Test** | **Treatment** | **Mean No. Eggs**^{**1**} | | | |
| | | Day 0 | Day 3 | Day 7 | Day 14 |
| | | | | | |

| **Clarified Oil:** | | | | | |
|---|---|---|---|---|---|
| Group 1 | Water | 434a | 376a | 640a | 514a |
| Group 2 | 1% | 34b | 47b | 82b | 75b |
| Group 3 | 3% | 13b | 10b | 37b | 46b |

| **Wax:** | | | | | |
|---|---|---|---|---|---|
| Group 4 | Water | 522a | 470a | 404a | 431a |
| Group 5 | 1% | 55b | 89b | 46b | 67b |
| Group 6 | 3% | 7b | 3b | 6b | 1b |

| | | | | | |
|---|---|---|---|---|---|
| 1 Values are means per 100 cm² leaf area. Means within trial followed by the same letter are not significantly different; DMRT, P = 0.05, N = 8 leaves. | | | | | |

Both the clarified neem oil and the neem wax formulations effectively repelled ovipositing *T. vaporariorum* for up to 14 days after spraying. There were no clear differences in the level of repellance between the neem oil and neem wax fractions, nor between the two concentrations tested. Although not statistically different from 1% concentration, generally the 3% clarified neem oil and neem wax formulations reduced the number of eggs laid to lower levels. The neem wax formulations appeared to have somewhat greater longevity of repellency over the 14 days of this test.

### EXAMPLE 4

This example illustrates the effectiveness of neem oil, clarified neem oil, and neem wax on bean rust control. Clarified neem oil and neem wax fractions were prepared according to Example 1. Neem oil product was prepared according to Example 1, stopping after the hexane was evaporated from the neem oil extract to yield the neem oil product. One percent solutions of neem oil product, clarified neem oil, and neem wax were prepared in water and sprayed on bean leaves. These leaves were then inoculated with bean rust spores, placed in a dew chamber for 16 hours and then moved to the greenhouse. After seven days, the number of rust pustules per leaf area were counted. The results, presented in Table 4, show that the clarified neem oil formulation showed the greatest reduction in pustules present. The neem wax formulation had the lowest reduction, although it exhibited a statistically significant improvement over the control.

**Table 4**

| **Treatment** | **Pustules**^{**1**} | **% Control** |
|---|---|---|
| Control | 5,900 a | 0 |
| 1% Neem Wax | 1,302 b | 78 |
| 1% Neem Oil Product | 840 bc | 86.1 |
| 1% Clarified Neem Oil | 573 c | 90.3 |

| | | |
|---|---|---|
| 1 Values are means calculated per 100 cm² leaf area. Means in the same trial followed by the same letter are not significantly different; DMRT, P = 0.05, N = 9. | | |

### EXAMPLE 5

This example illustrates the effectiveness of the clarified neem oil and neem wax fractions of this invention against the whitefly. It also illustrates lack of phytotoxicity of the neem oil fraction on tomato and *Pelargonum* seedlings with repeated applications.

**Table 5**

| **Trial** | **Treatment** | **Whitefly Count**¹ | |
|---|---|---|---|
| | | **Tomato** | ***Pelargonum*** |
| 1 | Water | 4 | 3.25 |
| 2 | 1:100 Clarified Neem oil | 3 | 2.0 |
| 3 | 1:50 Clarified Neem Oil | 1.5 | 1.25 |
| 4 | 1:100 Neem Wax | --- | ---- |
| 5 | 1:50 Neem Wax | --- | ---- |

| | | | |
|---|---|---|---|
| 1 Scale for whitefly count at 9 weeks: 1 = 0 whitefly scales/larvae 2 = less than 10 3 = 10 to 50 4 = greater than 50 | | | |

The plants were sprayed weekly. The greenhouse whitefly population was at a low level. Plants in Treatment 1 (Control) showed significantly higher numbers of adult whiteflies than any of the neem treatments after 5 weeks.

After 6 weeks, Treatments 4 and 5 demonstrated extensive, phytotoxicity (leaf injury) on both plant types. Applications of Treatments 4 and 5 were discontinued and plants in these treatments discarded.

After 9 weeks, Treatments 2 and 3 continued to exhibit no phytotoxicity on either plant type. Whitefly counts were made.

### EXAMPLE 6

This example demonstrates the effectiveness of clarified neem oil formulations for protection against powdery mildew development on greenhouse hydrangeas. Clarified neem oil was prepared according to Example 1. A 1% dilution of clarified neem oil was sprayed onto hydrangeas every 14 days. Comparison was made to a first control in which the plants were sprayed with water and a second control in which plants were sprayed with Sunspray™ pesticide, a commercially available formulation. Five plants were used in each test group. Each plant was examined for the presence of mildew on its leaves. The results, shown in Table 6, demonstrate that the clarified neem oil formulation is effective in preventing development of powdery mildew.

**Table 6**

| Effect of Clarified Neem Oil Spray on Powdery Mildew Development | | | | |
|---|---|---|---|---|
| Test | Treatment | Mildew¹ | | % Leaves Mildew + |
| | | + | - | |
| Group 1 | Water | 48.6 | 57.0 | 46.0% |
| Group 2 | 1% Clarified Neem Oil | 1.8 | 101.4 | 1.7% |
| Group 3 | 1% Sunspray Pesticide | 0.2 | 92.0 | 0.2% |

| | | | | |
|---|---|---|---|---|
| 1 Counts represent average number of leaves with mildew present (+) or absent (-). | | | | |

## Claims (Claims for the following Contracting State(s): AT, BE, CH, LI, DE, DK, FR, GB, GR, IT, LU, MC, NL, PT, SE)

1. A pesticide formulation comprising an effective amount of one or more neem fractions which are free of azadirachtin and which are prepared by extracting neem oil from neem seeds or expressed neem oil with a non-polar, hydrophobic solvent having a high neem oil solubility and no azadirachtin solubility, removing the solvent from the neem oil extract to obtain neem oil, cooling the neem oil to a temperature range of 5 to 15°C at which partial solidification occurs to form a neem wax fraction, and separating the neem wax fraction from the remaining liquid or clarified neem oil fraction.

2. The pesticide composition of Claim 1 which further comprises a surfactant present as 0.1 to 50% by volume of the final formulation.

3. The pesticide formulation of Claim 1 in which the clarified neem oil fraction is diluted to a 0.1 to 10% by volume concentration in water.

4. A foliar insecticide comprising the pesticide formulation of Claim 1.

5. An insect repellant and insecticide for the protection of fruits, grains and vegetables, comprising the pesticide formulation of Claim 1.

6. An insect repellant and insecticide for the protection and preservation of books, papers and cloths, comprising the pesticide formulation of Claim 1.

7. An insect repellant and insecticide for the protection of mammals, comprising the pesticide formulation of Claim 1.

8. The insect repellant and insecticide of Claim 7 which is in a suitable concentration and carrier or adjuvant for human application.

9. An insect ovicide, comprising the pesticide formulation of Claim 1.

10. A foliar fungicide comprising the pesticide formulation of Claim 1.

11. A fungicide for the protection of fruits, grains and vegetables, comprising the pesticide formulation of Claim 1.

12. A fungicide for the protection and preservation of books, papers and cloths, comprising the pesticide formulation of Claim 1.

13. A fungicide for the protection of mammals, comprising the pesticide formulation of Claim 1.

14. The fungicide of Claim 13 which is in a suitable concentration and carrier or adjuvant for human application.

15. Clarified neem oil, which is characterized as being free of azadirachtin, substantilly free of water and substantially free of neem wax having a melting point of about 10°C or higher, and which induces mortality at the egg or newly hatched nymphal stage of insect development.

16. A pesticide formulation comprising an effective amount of the clarified neem oil of Claim 15.

17. Neem wax, which is characterized as being free of azadirachtin, substantially free of water, being a flowable semi-solid at room temperature and precipitating from neem oil between about 5 and about 15°C, and which induces mortality at the egg or newly hatched nymphal stage of insect development.

18. A pesticide formulation comprising an effective amount of the neem wax of Claim 17.

19. A method for preparing two neem oil fractions which exhibit pesticidal activity and which are free of azadirachtin, comprising extracting neem oil from neem seeds with a non-polar, hydrophobic solvent having a high neem oil solubility and no azadirachtin solubility, removing the solvent from the neem oil extract to obtain neem oil, cooling the neem oil to a temperature range of 5 to 15°C at which neem wax precipitates to form a first fraction, and separating the first neem wax fraction from the remaining liquid fraction, or clarified neem oil.

20. The method of Claim 19 in which the neem oil is cooled to about 10°C.

21. A method for repelling and killing insect and fungal pests comprising applying to the surface to be protected an effective amount of pesticide formulation comprising an effective amount of one or more neem fractions which are prepared by extracting neem oil from neem seeds or expressed neem oil with a non-polar, hydrophobic solvent having a high neem oil solubility and no azadirachtin solubility, removing the solvent from the neem oil extract to obtain neem oil, cooling the neem oil to a temperature range of 5 to 15°C at which partial solidification occurs to form a neem wax fraction, and separating the neem wax fraction from the remaining liquid or clarified neem oil fraction.

## Claims (Claims for the following Contracting State(s): ES)

1. Process for the preparation of a pesticide formulation comprising an effective amount of one or more neem fractions which are free of azadirachtin, comprising extracting neem oil from neem seeds or expressed neem oil with a non-polar, hydrophobic solvent having a high neem oil solubility and no azadirachtin solubility, removing the solvent from the neem oil extract to obtain neem oil, cooling the neem oil to a temperature range of 5 to 15°C at which partial solidification occurs to form a neem wax fraction, and separating the neem wax fraction from the remaining liquid or clarified neem oil fraction.

2. Process according to claim 1 further comprising adding to the pesticide formulation a surfactant to 0.1 to 50% by volume of the final formulation.

3. Process according to claim 1 further comprising diluting the clarified neem oil fraction to a 0.1 to 10% by volume concentration in water.

4. Use of the pesticide formulation obtained by the process of claim 1 for the preparation of a foliar insecticide.

5. Use of the pesticide formulation obtained by the process of claim 1 for the preparation of an insect repellant and insecticide for the protection of fruits, grains and vegetables.

6. Use of the pesticide formulation obtained by the process of claim 1 for the preparation of an insect repellant and insecticide for the protection and preservation of books, papers and cloths.

7. Use of the pesticide formulation obtained by the process of claim 1 for the preparation of an insect repellant and insecticide for the protection of mammals.

8. Use according to claim 7 wherein the insect repellant and insecticide is in a suitable concentration and carrier or adjuvant for human application.

9. Use of the pesticide formulation obtained by the process of claim 1 for the preparation of an insect ovicide.

10. Use of the pesticide formulation obtained by the process of claim 1 for the preparation of a foliar fungicide.

11. Use of the pesticide formulation obtained by the process of claim 1 for the preparation of a fungicide for the protection of fruits, grains and vegetables.

12. Use of the pesticide formulation obtained by the process of claim 1 for the preparation of a fungicide for the protection and preservation of books, papers and cloths.

13. Use of the pesticide formulation obtained by the process of claim 1 for the preparation of a fungicide for the protection of mammals.

14. Use according to claim 13 wherein the fungicide is in a suitable concentration and carrier or adjuvant for human application.

15. Process for the preparation of clarified neem oil, which is characterized as being free of azadirachtin, substantially free of water and substantially free of neem wax having a melting point of about 10°C or higher, and which induces mortality at the egg or newly hatched nymphal stage of insect development, comprising extracting neem oil from neem seeds or expressed neem oil with a non-polar, hydrophobic solvent having a high neem oil solubility and no azadirachtin solubility, removing the solvent from the neem oil extract to obtain neem oil, cooling the neem oil to a temperature range of 5 to 15°C at which partial solidification occurs to form a neem wax fraction, and separating the neem wax fraction from the remaining liquid or clarified neem oil fraction.

16. Use of an effective amount of the clarified neem oil obtained by the process of claim 15 for the preparation of a pesticide formulation.

17. Process for the preparation of neem wax, which is characterized as being free of azadirachtin, substantially free of water, being a flowable semi-solid at room temperature and precipitating from neem oil between about 5 and about 15°C, and which induces mortality at the egg or newly hatched nymphal stage of insect development, comprising extracting neem oil from neem seeds or expressed neem oil with a non-polar, hydrophobic solvent having a high neem oil solubility and no azadirachtin solubility, removing the solvent from the neem oil extract to obtain neem oil, cooling the neem oil to a temperature range of 5 to 15°C at which partial solidification occurs to form a neem wax fraction, and separating the neem wax fraction from the remaining liquid or clarified neem oil fraction.

18. Use of an effective amount of the neem wax obtained by the process of claim 17 for the preparation of a pesticide formulation.

19. A method for preparing two neem oil fractions which exhibit pesticidal activity and which are free of azadirachtin, comprising extracting neem oil from neem seeds with a non-polar, hydrophobic solvent having a high neem oil solubility and no azadirachtin solubility, removing the solvent from the neem oil extract to obtain neem oil, cooling the neem oil to a temperature range of 5 to 15°C at which neem wax precipitates to form a first fraction, and separating the first neem wax fraction from the remaining liquid fraction, or clarified neem oil.

20. The method of claim 19 in which the neem oil is cooled to about 10°C.

21. A method for repelling and killing insect and fungal pests comprising applying to the surface to be protected an effective amount of pesticide formulation comprising an effective amount of one or more neem fractions which are prepared by extracting neem oil from neem seeds or expressed neem oil with a non-polar, hydrophobic solvent having a high neem oil solubility and no azadirachtin solubility, removing the solvent from the neem oil extract to obtain neem oil, cooling the neem oil to a temperature range of 5 to 15°C at which partial solidification occurs to form a neem wax fraction, and separating the neem wax fraction from the remaining liquid or clarified neem oil fraction.

## Patentansprüche (Patentansprüche für folgende(n) Vertragsstaat(en): AT, BE, CH, LI, DE, DK, FR, GB, GR, IT, LU, MC, NL, PT, SE)

1. Eine Pestizid-Formulierung, die eine effektive Menge eines oder mehrerer Nim-Fraktionen umfaßt, die frei von Azadirachtin sind und die durch Extrahieren von Nimöl aus Nimsamen oder ausgepreßtem Nimöl mit einem nicht-polaren, hydrophoben Lösungsmittel, das eine hohe Nimöl-Löslichkeit und keine Azadirachtin-Löslichkeit besitzt, durch Entfernen des Lösungsmittels von dem Nimöl-Extrakt zum Erhalten von Nimöl, durch Kühlen des Nimöls auf einen Temperaturbereich von 5 bis 15°C, bei dem eine teilweise Erstarrung auftritt, zum Bilden einer Nimwachs-Fraktion und durch Abtrennen der Nimwachs-Fraktion von der verbleibenden Flüssigkeit oder der geklärten Nimöl-Fraktion hergestellt sind.

2. Die Pestizid-Formulierung nach Anspruch 1, die ferner einen oberflächenaktiven Stoff umfaßt, der in der endgültigen Formulierung in 0,1 bis 50 Vol% vorliegt.

3. Die Pestizid-Formulierung nach Anspruch 1, bei der die geklärte Nimöl-Fraktion auf eine Konzentration von 0,1 bis 10 Vol% in Wasser verdünnt ist.

4. Ein Blatt-Insektizid, das die Pestizid-Formulierung nach Anspruch 1 umfaßt.

5. Ein Insektenabwehrmittel und Insektizid zum Schutz von Früchten, Getreide und Gemüse, das die Pestizid-Formulierung nach Anspruch 1 umfaßt.

6. Ein Insektenabwehrmittel und Insektizid zum Schutz und zur Konservierung von Büchern, Papieren und Gewebe, das die Pestizid-Formulierung nach Anspruch 1 umfaßt.

7. Ein Insektenabwehrmittel und Insektizid zum Schutz von Säugern, das die Pestizid-Formulierung nach Anspruch 1 umfaßt.

8. Das Insektenabwehrmittel und Insektizid nach Anspruch 7, das in einer geeigneten Konzentration und einem Träger oder Adjuvans zur Applikation am Menschen vorliegt.

9. Ein Insekten-Ovizid, das die Pestizid-Formulierung nach Anspruch 1 umfaßt.

10. Ein Blattfungizid, das die Pestizid-Formulierung nach Anspruch 1 umfaßt.

11. Ein Fungizid zum Schutz von Früchten, Getreide und Gemüse, das die Pestizid-Formulierung nach Anspruch 1 umfaßt.

12. Ein Fungizid zum Schutz und zur Konservierung von Büchern, Papieren und Geweben, das die Pestizid-Formulierung nach Anspruch 1 umfaßt.

13. Ein Fungizid zum Schutz von Säugern, das die Pestizid-Formulierung nach Anspruch 1 umfaßt.

14. Das Fungizid nach Anspruch 13, das in einer geeigneten Konzentration und einem Träger oder Adjuvans zur Applikation am Menschen vorliegt.

15. Geklärtes Nimöl, das dadurch gekennzeichnet ist, daß es frei von Azadirachtin, im wesentlichen frei von Wasser und im wesentlichen frei von Nimwachs ist und einen Schmelzpunkt von etwa 10°C oder höher besitzt und das Mortalität auf dem Ei- oder frischgeschlüpften Nymphenstadium der Insekten-Entwicklung induziert.

16. Eine Pestizid-Formulierung, die eine effektive Menge des geklärten Nimöls nach Anspruch 15 umfaßt.

17. Nimwachs, das dadurch gekennzeichnet ist, daß es frei von Azadirachtin, im wesentlichen frei von Wasser und bei Raumtemperatur eine rieselfähige halbfeste Substanz ist und aus Nimöl bei etwa 5 bis etwa 15°C präzipitiert und das Mortalität auf dem Ei- oder frischgeschlüpften Nymphenstadium der Insekten-Entwicklung induziert.

18. Eine Pestizid-Formulierung, die eine effektive Menge des Nimwachses nach Anspruch 17 umfaßt.

19. Verfahren zur Herstellung von zwei Nimöl-Fraktionen, die Pestizid-Aktivität aufweisen und die frei von Azadirachtin sind, das das Extrahieren von Nimöl aus Nimsamen mit einem nicht-polaren, hydrophoben Lösungsmittel, das eine hohe Nimöl-Löslichkeit und keine Azadirachtin-Löslichkeit besitzt, das Entfernen des Lösungsmittels von dem Nimöl-Extrakt zum Erhalten von Nimöl, das Kühlen des Nimöls auf einen Temperaturbereich von 5 bis 15°C, bei dem Nimwachs präzipitiert zum Bilden einer ersten Fraktion und das Abtrennen der ersten Nimwachs-Fraktion von der verbleibenden Flüssigkeits-Fraktion oder dem geklärten Nimöl umfaßt.

20. Verfahren nach Anspruch 19, bei dem das Nimöl auf etwa 10°C gekühlt wird.

21. Verfahren zur Abschreckung und Tötung von Insekten- und Pilz-Schädlingen, das die Applikation einer effektiven Menge der Pestizid-Formulierung auf die zu schützende Oberfläche umfaßt, wobei die Pestizid-Formulierung eine effektive Menge eines oder mehrerer Nimöl-Fraktionen umfaßt, die durch Extrahieren von Nimöl aus Nimsamen oder ausgepreßtem Nimöl mit einem nicht-polaren, hydrophoben Lösungsmittel, das eine hohe Nimöl-Löslichkeit und keine Azadirachtin-Löslichkeit aufweist, durch Entfernen des Lösungsmittels von dem Nimöl-Extrakt zum Erhalten von Nimöl, durch Kühlen des Nimöls auf einen Temperaturbereich von 5 bis 15°C, bei dem teilweise Erstarrung auftritt zum Bilden einer Nimwachs-Fraktion und durch Abtrennen der Nimwachs-Fraktion von der verbleibenden Flüssigkeit oder der geklärten Nimöl-Fraktion hergestellt sind.

## Patentansprüche (Patentansprüche für folgende(n) Vertragsstaat(en): ES)

1. Verfahren zur Herstellung einer Pestizid-Formulierung, die eine effektive Menge eines oder mehrerer Nim-Fraktionen umfaßt, die frei von Azadirachtin sind, welches das Extrahieren von Nimöl aus Nimsamen oder ausgepreßtem Nimöl mit einem nicht-polaren, hydrophoben Lösungsmittel, das eine hohe Nimöl-Löslichkeit und keine Azadirachtin-Löslichkeit besitzt, das Entfernen des Lösungsmittels von dem Nimöl-Extrakt zum Erhalten von Nimöl, das Kühlen des Nimöls auf einen Temperaturbereich von 5 bis 15°C, bei dem eine teilweise Erstarrung eintritt, zum Bilden einer Nimwachs-Fraktion und das Abtrennen der Nimwachs-Fraktion von der verbleibenden Flüssigkeit oder der geklärten Nimöl-Fraktion umfaßt.

2. Verfahren gemäß Anspruch 1, das ferner die Zugabe eines oberflächenaktiven Stoffes zu der Pestizid-Formulierung in 0,1 bis 50 Vol% bezogen auf die endgültige Formulierung umfaßt.

3. Verfahren gemäß Anspruch 1, das ferner das Verdünnen der geklärten Nimöl-Fraktion auf eine Konzentration von 0,1 bis 10 Vol% in Wasser umfaßt.

4. Verwendung der nach Anspruch 1 hergestellten Pestizid-Formulierung zur Herstellung eines Blattinsektizids.

5. Verwendung der nach Anspruch 1 hergestellten Pestizid-Formulierung zur Herstellung eines Insektenabwehrmittels und Insektizids zum Schutz von Früchten, Getreide und Gemüse.

6. Verwendung der nach Anspruch 1 hergestellten Pestizid-Formulierung zur Herstellung eines Insektenabwehrmittels und Insektizids zum Schutz und zur Konservierung von Büchern, Papieren und Geweben.

7. Verwendung der nach Anspruch 1 hergestellten Pestizid-Formulierung zur Herstellung eines Insektenabwehrmittels und Insektizids zum Schutz von Säugern.

8. Verwendung nach Anspruch 7, dadurch gekennzeichnet, daß das Insektenabwehrmittel und Insektizid in einer geeigneten Konzentration und einem Träger oder Adjuvans zur Anwendung am Menschen vorliegt.

9. Verwendung der nach Anspruch 1 hergestellten Pestizid-Formulierung zur Herstellung eines Insekten-Ovizids.

10. Verwendung der nach Anspruch 1 hergestellten Pestizid-Formulierung zur Herstellung eines Blattfungizids.

11. Verwendung der nach Anspruch 1 hergestellten Pestizid-Formulierung zur Herstellung eines Fungizids zum Schutz von Früchten, Getreide und Gemüse.

12. Verwendung der nach Anspruch 1 hergestellten Pestizid-Formulierung zur Herstellung eines Fungizids zum Schutz oder zur Konservierung von Büchern, Papieren und Geweben.

13. Verwendung der nach Anspruch 1 hergestellten Pestizid-Formulierung zur Herstellung eines Fungizids zum Schutz von Säugern.

14. Verwendung gemäß Anspruch 13, wobei das Fungizid in einer geeigneter Konzentration und einem Träger oder Adjuvans zur Anwendung am Menschen vorliegt.

15. Verfahren zur Herstellung von geklärtem Nimöl, das dadurch gekennzeichnet ist, daß es frei von Azadirachtin, im wesentlichen frei von Wasser und im wesentlichen frei von Nimwachs ist, einen Schmelzpunkt von etwa 10°C oder höher besitzt und das die Mortalität im Ei- oder frischgeschlüpften Nymphenstadium der Insekten-Entwicklung induziert, wobei das Verfahren das Extrahieren von Nimöl aus Nimsamen oder ausgepreßtem Nimöl mit einem nicht-polaren, hydrophoben Lösungsmittel, das eine hohe Nimöl-Löslichkeit und keine Azadirachtin-Löslichkeit besitzt, das Entfernen des Lösungsmittels von dem Nimöl-Extrakt zum Erhalten von Nimöl, das Kühlen des Nimöls auf einen Temperaturbereich von 5 bis 15°C, bei dem teilweise Erstarrung eintritt, zum Bilden einer Nimwachs-Fraktion und das Abtrennen der Nimwachs-Fraktion von der verbleibenden Flüssigkeit oder der geklärten Nimöl-Fraktion umfaßt.

16. Verwendung einer effektiven Menge des nach Anspruch 15 hergestellten geklärten Nimöls zur Herstellung einer Pestizid-Formulierung.

17. Verfahren zur Herstellung von Nimwachs, das dadurch gekennzeichnet ist, daß es frei von Azadirachtin, im wesentlichen frei von Wasser und bei Raumtemperataur eine rieselfähige halbfeste Substanz ist und aus Nimöl bei etwa 5 bis 15°C präzipitiert und das die Mortalität auf dem Ei- oder frischgeschlüpften Nymphenstadium der Insekten-Entwicklung induziert, wobei das Verfahren das Extrahieren des Nimöls aus Nimsamen oder ausgepreßtem Nimöl mit einem nicht-polaren, hydrophoben Lösungsmittel, das eine hohe Nimöl-Löslichkeit und keine Azadirachtin-Löslichkeit besitzt, das Entfernen des Lösungsmittels von dem Nimöl-Extrakt zum Erhalten von Nimöl, das Kühlen des Nimöls auf einen Temperaturbereich von 5 bis 15°C, bei dem teilweise Erstarrung eintritt, zum Bilden einer Nimwachs-Fraktion und das Abtrennen der Nimwachs-Fraktion von der verbleibenden Flüssigkeit oder der geklärten Nimöl-Fraktion umfaßt.

18. Verwendung einer effektiven Menge des nach Anspruch 17 hergestellten Nimwachses zur Herstellung einer Pestizid-Formulierung.

19. Verfahren zur Herstellung von zwei Nimöl-Fraktionen, die Pestizid-Aktivität aufweisen und die frei von Azadirachtin sind, welches das Extrahieren von Nimöl von aus Nimsamen mit einem nicht-polaren, hydrophoben Lösungsmittel, das eine hohe Nimöl-Löslichkeit und keine Azadirachtin-Löslichkeit besitzt, das Entfernen des Lösungsmittels von dem Nimöl-Extrakt zum Erhalten von Nimöl, das Kühlen des Nimöls auf einen Temperaturbereich von 5 bis 15°C, bei dem Nimwachs präzipitiert, zum Bilden einer ersten Fraktion und das Abtrennen der ersten Nimwachs-Fraktion von der verbleibenden Flüssigkeits-Fraktion oder dem geklärten Nimöl umfaßt.

20. Verfahren nach Anspruch 19, bei dem das Nimöl auf etwa 10°C gekühlt wird.

21. Verfahren zur Abschreckung und Tötung von Insekten- und Pilz-Schädlingen, das die Applikation einer effektiven Menge der Pestizid-Formulierung auf die zu schützende Oberfläche umfaßt, wobei die Pestizid-Formulierung eine effektive Menge eines oder mehrerer Nimöl-Fraktionen umfaßt, die durch Extrahieren von Nimöl aus Nimsamen oder ausgepreßtem Nimöl mit einem nicht-polaren, hydrophoben Lösungsmittel, das eine hohe Nimöl-Löslichkeit und keine Azadirachtin-Löslichkeit aufweist, durch Entfernen des Lösungsmittels von dem Nimöl-Extrakt zum Erhalten von Nimöl, das Kühlen des Nimöls auf einen Temperaturbereich von 5 bis 15°C, bei dem teilweise Erstarrung auftritt zum Bilden einer Nimwachs-Fraktion und durch Abtrennen der Nimwachs-Fraktion von der verbleibenden Flüssigkeit oder der geklärten Nimöl-Fraktion hergestellt wurden.

## Revendications (Revendications pour l'(les) Etat(s) contractant(s) suivant(s): AT, BE, CH, LI, DE, DK, FR, GB, GR, IT, LU, MC, NL, PT, SE)

1. Formulation de pesticide comprenant une quantité efficace d'une ou plusieurs fractions de neem qui sont exemptes d'azadirachtine et qui sont préparées en extrayant l'huile de neem, des graines de neem ou l'huile exprimée de neem avec un solvant hydrophobe non polaire ayant une forte solubilité de l'huile de neem et pas de solubilité de l'azadirachtine, en retirant le solvant de l'extrait d'huile de neem pour obtenir l'huile de neem en refroidissant l'huile de neem à une température comprise entre 5 et 15°C à laquelle se produit une solidification partielle pour former une fraction de cire de neem et en séparant la fraction de cire de neem de la fraction restante d'huile de neem liquide ou clarifiée.

2. Composition pesticide de la revendication 1 qui contient de plus un agent tensio-actif présent sous la forme de 0,1 à 50 % en volume de la formulation finale.

3. Formulation pesticide de la revendication 1 où la fraction clarifiée d'huile de neem est diluée à une concentration à 0,1 à 10 % en volume dans l'eau.

4. Insecticide des feuilles comprenant la formulation pesticide de la revendication 1.

5. Agent répulsif pour les insectes et insecticide pour la protection des fruits, des graines et des légumes, comprenant la formulation pesticide de la revendication 1.

6. Agent répulsif pour les insectes et insecticide pour la protection et la préservation des livres, des papiers et des vêtements comprenant la formulation pesticide de la revendication 1.

7. Agent répulsif pour les insectes et insecticide pour la protection des mammifères comprenant la formulation pesticide de la revendication 1.

8. Agent répulsif pour les insectes et insecticide de la revendication 7 qui est en une concentration appropriée et un support ou adjuvant pour application humaine.

9. Ovicide pour les insectes comprenant la formulation pesticide de la revendication 1.

10. Fongicide pour les feuilles comprenant la formulation pesticide de la revendication 1.

11. Fongicide pour la protection des fruits, des graines et des légumes comprenant la formulation pesticide de la revendication 1.

12. Fongicide pour la protection et la préservation des livres, des papiers et des vêtements comprenant la formulation pesticide de la revendication 1.

13. Fongicide pour la protection des mammifères comprenant la formulation pesticide de la revendication 1.

14. Fongicide de la revendication 13 qui est à une concentration appropriée et un support ou adjuvant pour application humaine.

15. Huile clarifiée de neem qui est caractérisée comme étant exempte d'azadirachtine, sensiblement exempte d'eau et sensiblement exempte de cire de neem ayant un point de fusion d'environ 10°C ou plus et qui induit la mortalité au stade de l'oeuf ou de la nymphe nouvellement éclose du développement de l'insecte.

16. Formulation pesticide comprenant une quantité efficace de l'huile clarifiée de neem de la revendication 15.

17. Cire de neem qui est caractérisée comme étant exempte d'azadirachtine, sensiblement exempte d'eau, étant un semi-solide fluide à température ambiante et précipitant de l'huile de neem entre environ 5 et environ 15°C et qui induit la mortalité au stade de l'oeuf ou de la nymphe nouvellement éclose du développement de l'insecte.

18. Formulation pesticide comprenant une quantité efficace de la cire de neem de la revendication 17.

19. Méthode de préparation de deux fractions d'huile de neem qui présentent une activité pesticide et qui sont exemptes d'azadirachtine consistant à extraire l'huile de neem des graines de neem avec un solvant hydrophobe non polaire ayant une forte solubilité de l'huile de neem et pas de solubilité de l'azadirachtine, à retirer le solvant de l'extrait d'huile de neem pour obtenir l'huile de neem, a refroidir l'huile de neem à une température comprise entre 5 et 15°C, à laquelle la cire de neem précipite pour former une première fraction et à séparer la première fraction de cire de neem de la fraction liquide restante ou de l'huile de neem clarifiée.

20. Méthode de la revendication 19 où l'huile de neem est refroidie aux environs de 10°C.

21. Méthode pour repousser et tuer les insectes et les pestes fongiques consistant à appliquer, à la surface à protéger, une quantité efficace d'une formulation pesticide comprenant une quantité efficace d'une ou plusieurs fractions de neem qui sont préparées en extrayant l'huile de neem des graines de neem où l'huile exprimée de neem avec un solvant hydrophobe non polaire ayant une forte solubilité de l'huile de neem et pas de solubilité de l'azadirachtine, à retirer le solvant de l'extrait d'huile de neem pour obtenir l'huile de neem, à refroidir l'huile de neem à une température comprise entre 5 et 15°C à laquelle il se produit une solidification partielle pour former une fraction de cire de neem et à séparer la fraction de cire de neem de la fraction d'huile de neem clarifiée ou liquide restante.

## Revendications (Revendications pour l'(les) Etat(s) contractant(s) suivant(s): ES)

1. Procédé pour la préparation d'une formulation pesticide comprenant une quantité efficace d'une ou plusieurs fractions de neem qui sont sans azadirachtine, consistant à extraire l'huile de neem des graines de neem ou l'huile de neem exprimée avec un solvant hydrophobe non polaire ayant une forte solubilité de l'huile de neem et pas de solubilité de l'azadirachtine, à retirer le solvant de l'extrait d'huile de neem pour obtenir l'huile de neem, à refroidir l'huile de neem à une température comprise entre 5 et 15°C à laquelle se produit une solidification partielle pour former une fraction de cire de neem et à séparer la fraction de cire de neem de la fraction d'huile de neem clarifiée ou liquide restante.

2. Procédé selon la revendication 1 consistant de plus à ajouter à la formulation pesticide un agent tensio-actif jusqu'à 0,1 à 50 % en volume de la formulation finale.

3. Procédé selon la revendication 1 consistant de plus à diluer la fraction d'huile de neem clarifiée jusqu'à une concentration de 0,1 à 10 % en volume dans l'eau.

4. Utilisation de la formulation pesticide obtenue par le procédé de la revendication 1 pour la préparation d'un insecticide pour les feuilles.

5. Utilisation de la formulation pesticide obtenue par le procédé de la revendication 1 pour la préparation d'un agent répulsif pour les insectes et d'un insecticide pour la protection des fruits, des grains et des légumes.

6. Utilisation de la formulation pesticide obtenue par le procédé de la revendication 1 pour la préparation d'un agent répulsif pour les insectes et d'un insecticide pour la protection et la préservation des livres, des papiers et des vêtements.

7. Utilisation de la formulation pesticide obtenue par le procédé de la revendication 1 pour la préparation d'un agent répulsif pour les insectes et d'un insecticide pour la protection des mammifères.

8. Utilisation selon la revendication 7 où l'agent répulsif pour les insectes et l'insecticide est dans une concentration appropriée et un support ou adjuvant pour une application humaine.

9. Utilisation de la formulation pesticide obtenue par le procédé de la revendication 1 pour la préparation d'un ovicide pour les insectes.

10. Utilisation de la formulation pesticide obtenue par le procédé de la revendication 1 pour la préparation d'un fongicide pour les feuilles.

11. Utilisation de la formulation pesticide obtenue par le procédé de la revendication 1 pour la préparation d'un fongicide pour la protection des fruits, grains et légumes.

12. Utilisation de la formulation pesticide obtenue par le procédé de la revendication 1 pour la préparation d'un fongicide pour la protection et la préservation des livres, papiers et vêtements.

13. Utilisation de la formulation pesticide obtenue par le procédé de la revendication 1 pour la préparation d'un fongicide pour la protection des mammifères.

14. Utilisation selon la revendication 13 où le fongicide est à une concentration appropriée et un support ou adjuvant pour application humaine.

15. Procédé pour la préparation d'une huile clarifiée de neem qui est caractérisée comme étant exempte d'azadirachtine, sensiblement exempte d'eau et sensiblement exempte de cire de neem, ayant un point de fusion d'environ 10°C ou plus et qui induit la mortalité au stade de l'oeuf ou de la nymphe nouvellement éclose du développement de l'insecte, consistant à extraire l'huile de neem des graines de neem où l'huile de neem exprimée avec un solvant hydrophobe non polaire ayant une forte solubilité de l'huile de neem et pas de solubilité de l'azadirachtine, à retirer le solvant de l'extrait d'huile de neem pour obtenir l'huile de neem, à refroidir l'huile de neem à une température comprise entre 5 et 15°C à laquelle se produit une solidification partielle pour former une fraction de cire de neem et à séparer la fraction de cire de neem de la fraction restante d'huile de neem liquide ou clarifiée.

16. Utilisation d'une quantité efficace de l'huile clarifiée de neem obtenue par le procédé de la revendication 15 pour la préparation d'une formulation pesticide.

17. Procédé pour la préparation de cire de neem qui est caractérisée en ce qu'elle ne contient pas d'azadirachtine, en ce qu'elle est sensiblement exempte d'eau en ce que c'est un semi-solide fluide à température ambiante et précipitant de l'huile de neem entre environ 5 et environ 15°C et qui induit la mortalité au stade de l'oeuf ou de la nymphe nouvellement éclose du développement de l'insecte, consistant à extraire l'huile de neem des graines de neem ou l'huile exprimée de neem avec un solvant hydrophobe non polaire ayant une forte solubilité de l'huile de neem et pas de solubilité de l'azadirachtine, à retirer le solvant de l'extrait d'huile de neem pour obtenir l'huile de neem, à refroidir l'huile de neem à une température comprise entre 5 et 15°C à laquelle se produit une solidification partielle pour former une fraction de cire de neem et à séparer la fraction de cire de neem de la fraction d'huile de neem liquide ou clarifiée restante.

18. Utilisation d'une quantité efficace de cire de neem obtenue par le procédé de la revendication 17 pour la préparation d'une formulation pesticide.

19. Méthode de préparation de deux fractions d'huile de neem qui présentent une activité pesticide et qui sont exemptes d'azadirachtine, consistant à extraire l'huile de neem de graines de neem avec un solvant hydrophobe non polaire ayant une forte solubilité de l'huile de neem et pas de solubilité de l'azadirachtine, à retirer le solvant de l'extrait d'huile de neem pour obtenir l'huile de neem, à refroidir l'huile de neem à une température comprise entre 5 et 15°C à laquelle la cire de neem précipite pour former une première fraction et à séparer la première fraction de cire de neem de la fraction liquide restante ou de l'huile de neem clarifiée.

20. Méthode de la revendication 19 où l'huile de neem est refroidie aux environs de 10°C.

21. Méthode pour repousser et tuer des insectes et des pestes fongiques, consistant à appliquer à la surface à protéger une quantité efficace d'une formulation pesticide comprenant une quantité efficace d'une ou plusieurs fractions de neem qui sont préparées en extrayant l'huile de neem des graines de neem ou l'huile exprimée de neem avec un solvant hydrophobe non polaire ayant une forte solubilité de l'huile de neem et pas de solubilité de l'azadirachtine, à retirer le solvant de l'extrait d'huile de neem pour obtenir l'huile de neem, à refroidir l'huile de neem à une température comprise entre 5 et 15°C à laquelle se produit une solidification partielle pour former une fraction de cire de neem et à séparer la fraction de cire de neem de la fraction d'huile de neem clarifiée ou liquide restante.
